# EUROPEAN PATENT APPLICATION

(11) **EP 4 502 445 A1**
(43) Date of publication of application: **05.02.2025**
(21) Application number: 22932984.2
(22) Date of filing: 07.09.2022
(51) Int. Cl.: F16L 29/04

(54) **FLUID CONNECTOR AND ENERGY STORAGE AND HEAT DISSIPATION SYSTEM**

(30) Priority: 25.03.2022 CN 202220680249 U
(71) Applicant: SHENZHEN ENVICOOL SMART CONNECTION TECHNOLOGY CO., LTD., Shenzhen, Guangdong 518000 (CN)
(72) Inventor: CHEN, Gang, Shenzhen, Guangdong 518000 (CN)
(74) Representative: Potter Clarkson
(86) International application number: PCT/CN2022/117459
(87) International publication number: WO 2023/178932

(57) **Abstract**

Disclosed are a fluid connector and an energy storage and heat dissipation system. The fluid connector (1000) is formed by means of injection-molding engineering plastic and comprises a male end connector (100) and a female end connector (200). The male end connector comprises a male end main body (101) and a valve head assembly, and the valve head assembly blocks the male end main body. The female end connector comprises a female end main body (201) and a valve core assembly, and the valve core assembly blocks the female end main body. The male end main body is insertedly connected to the female end main body, and when the male end body and the female end body are inserted in place, the valve head assembly and the valve core assembly are both opened, so as to place the male end connector and the female end connector in communication. When the male end main body and the female end main body need to be separated, the valve head assembly blocks the male end main body, and the valve core assembly blocks the female end main body, such that liquid in a pipe to be connected connecting the male end main body and the female end main body is prevented from flowing out. The fluid connector is low in cost, surface reprocessing is not needed, batch production can be achieved, and production efficiency is high.

## Description

The present application claims the priority of Chinese Patent Application No. 202220680249.1, titled "FLUID CONNECTOR AND ENERGY STORAGE AND HEAT DISSIPATION SYSTEM", filed on March 25, 2022 with the China National Intellectual Property Administration, which is incorporated herein by reference in its entirety.

### FIELD

The present application relates to the technical field of energy storage liquid cooling technology, in particular to a fluid connector and an energy storage heat dissipation system.

### BACKGROUND

At present, during the process of energy storage and release in the energy storage industry, the heat dissipation of components is mostly carried out by a circulating liquid to carry away heat.

In the energy storage heat dissipation system, pipes are connected by pipe joints, which play the role of connection and sealing. When the male and female ends of the pipe joints are plug-connected with each other, the pipes are in communication, and the liquid flows in the pipes to circulate for heat dissipation. When the male and female ends of the pipe joint are separated, the pipes are disconnected, and the liquid will flow out of the pipes from the male and female ends of the pipe joints, causing many problems to installation, commissioning, maintenance, etc.

Moreover, the conventional connectors are generally metal connectors, and the cost of raw materials is high. Metal connectors are usually manufactured by machining, which is low in machining speed and wastes some materials; in addition, surface treatment is also required after machining, which increases manufacturing costs.

### SUMMARY

In view of this, a first object of the present application is to provide a fluid connector, which can not only solve the leakage problem of the pipeline of the energy storage heat dissipation system during opening or closing process of the pipeline, but also reduce the manufacturing cost of the connector, improve the processing speed of the connector, and reduce the material waste of the connector.

A second object of the present application is to provide an energy storage heat dissipation system.

In order to achieve the above first object, the following solutions are provided according to the present application.

A fluid connector, being formed by injection molding of an engineering plastic, where the fluid connector includes a male end joint and a female end joint;
the male end joint includes a male end body and a valve head assembly, and the valve head assembly is configured to block the male end body;
the female end joint includes a female end body and a valve core assembly, and the valve core assembly is configured to block the female end body; and
the male end body is plug-connected with the female end body, and in a case that the male end body and the female end body are plugged in place, both the valve head assembly and the valve core assembly are opened, to allow communication between the male end joint and the female end joint.

In a specific solution, the male end joint further includes a first reset member; and the first reset member is installed in an inner cavity of the male end body, and is configured to drive the valve head assembly to reset and close.

In another specific solution, the first reset member is an elastic reset member, one end of the first reset member is connected to or abuts against an inner wall of the male end body, and the other end of the first reset member is configured to abut against or be connected to the valve head assembly;
when the male end body and the female end body are plugged in place, the female end body pushes the valve head assembly to open and compresses the first reset member; and
when the male end body and the female end body are in a separated state, the first reset member drives the valve head assembly to close under an action of a restoring force.

In another specific solution, the valve head assembly includes a valve head and a first sealing ring, where
the valve head includes a valve head blocking portion and an abutting portion, a first sealing groove is provided on the inner wall of the male end body, the first sealing ring is installed in the first sealing groove to provide sealing between the valve head blocking portion and the male end body, the abutting portion is fixed on the valve head blocking portion and is configured to abut against the first reset member.

In another specific solution, a cross-section of the abutting portion gradually decreases along the direction approaching the first reset member; and
the valve head further includes a protruding rod arranged at an end of the abutting portion away from the valve head blocking portion, and an end of the protruding rod away from a conical portion is provided with a conical protrusion.

In another specific solution, the female end joint further includes a second reset member, and the second reset member is installed in an inner cavity of the female end body, and is configured to drive the valve core assembly to reset and close.

In another specific solution, the second reset member is an elastic reset member, and one end of the second reset member is connected to or abut against an inner cavity wall of the female end body, and the other end of the second reset member is configured to abut against or be connected to the valve core assembly;
when the male end body and the female end body are plugged in place, the male end body pushes the valve core assembly to open and compresses the second reset member; and
when the male end body and the female end body are in a separated state, the second reset member drives the valve core assembly to reset and close under an action of a restoring force.

In another specific solution, a valve stem is installed in the inner cavity of the female end body, and the valve stem is configured to abut against the valve head assembly, to push the valve head assembly to open, where
a communication cavity is provided inside the valve stem, and the communication cavity is in communication with a first opening of the female end body for connecting a pipe to be connected, and a communication hole being in communication with the communication cavity is provided on a side wall of the valve stem;
the valve core assembly is slidably sleeved on the valve stem in a sealed manner, and is slidably sleeved inside the female end body in a sealed manner, to isolate openings at two ends of the female end body; and
in a case that the male end body and the female end body are plugged in place, the male end body pushes the valve core assembly to slide to expose the communication hole, to make the communication hole be in communication with a second opening of the female end body.

In another specific solution, the valve core assembly includes a valve core and a second sealing ring, where
a second sealing groove configured for installing the second sealing ring is provided on an inner wall of the valve core, and the second sealing ring is configured to provide sealing between the valve stem and the valve core.

In another specific solution, the valve core includes a first valve core sleeve and a second valve core sleeve connected to the first valve core sleeve, where
the first valve core sleeve is sleeved on the valve stem in a sealed manner, and a first step configured to abut against the male end body is formed at a connection between an inner wall of the second valve core sleeve and an inner wall of the first valve core sleeve.

In another specific solution, a third sealing groove is provided on the inner wall of the first valve core sleeve, where
the third sealing groove is provided at a position of the inner wall of the second valve core sleeve where the inner wall of the second valve core sleeve is connected to the first valve core sleeve, and a third sealing ring for sealing an outer wall of the male end body is installed in the third sealing groove in a sealed manner;
a fourth sealing groove is provided on the inner wall of the female end body, and a fourth sealing ring for sealing an outer wall of the second valve core sleeve is installed in the fourth sealing groove in a sealed manner; and
in a case that the male end body and the female end body are plugged in place, an inner wall of the fourth sealing ring is sealingly connected to the outer wall of the male end body, and an inner wall of the first sealing ring is sealingly connected to an outer wall of the valve stem; and/or
a first limiting protrusion is provided on an outer wall of the valve core, and a second limiting protrusion configured to abut against the first limiting protrusion is provided on the inner wall of the female end body.

In another specific solution, the fluid connector further includes a locking assembly for locking the female end joint and the male end joint.

In another specific solution, the locking assembly includes a sliding sleeve, a locking ball and an elastic member, where
the sliding sleeve is connected to an outer side of the female end body in a slidable manner, one end of the elastic member is connected to or abuts against the female end body, and the other end of the elastic member abuts against or is connected to the sliding sleeve;
a side wall of the female end body is provided with a receiving through hole for receiving the locking ball, when the male end body and the female end body are in a separated state, the elastic member is in a compressed state, and an outer wall of a valve core supports the locking ball so that at least a part of the locking ball extend from the receiving through hole and abuts against the sliding sleeve in a limiting manner; and
an outer wall of the male end body is provided with an receiving groove for receiving the locking ball, and in a case that the male end body and the female end body are plugged in place, the sliding sleeve pushes the locking ball into the receiving groove, a pushing portion of the sliding sleeve for limiting and abutting against the locking ball passes over the locking ball, and a constant-diameter surface of an inner wall of the sliding sleeve is configured to press the locking ball into the receiving groove.

In another specific solution, the outer wall of the female end body is provided with an anti-off protrusion for preventing the sliding sleeve from slipping off; and/or,
an outer wall of the sliding sleeve is provided with an anti-slip protrusion, to facilitate handholding.

In another specific solution, the female end body includes a female end valve seat and a female end valve body, the female end valve seat is threadedly connected to the female end valve body, and a fifth sealing ring provides sealing between the female end valve seat and the female end valve body;
the male end body includes a male end valve seat and a male end valve body, the male end valve seat is threadedly connected to the male end valve body, and a sixth sealing ring provides sealing between the male end valve seat and the male end valve bod; and
the male end valve seat and the female end valve seat are used to be connected to pipes to be connected respectively.

The various embodiments according to the present application can be arbitrarily combined as needed, and the embodiments obtained after these combinations are also within the scope of the present application and are part of the specific solutions of the present application.

When the fluid connector according to the present application is used, the male end joint and the female end joint are connected to two pipes to be connected respectively. When the two pipes to be connected need to be in communication, the male end body and the female end body are plug-connected, and both the valve head assembly and the valve core assembly are opened to form an unblocked channel. When the two pipes to be connected need to be disconnected, the male end body and the female end body are separated; after separation, the valve head assembly blocks the male end body, and the valve core assembly blocks the female end body, to prevent the fluid flows out from the pipes to be connected which are connected to the male end body and the female end body, which facilitates the installation and commissioning of the pipes in the energy storage heat dissipation system.

In addition, the cost of plastic is low, and the fluid connector is formed by injection molding of the engineering plastic, which reduces the cost of raw materials, and the surface treatment is avoided after the fluid connector is molded, which reduces the manufacturing cost; the fluid connector realizes mass production through injection molding, which improves production efficiency.

In order to achieve the above second object, the following solutions are provided according to the present application.

An energy storage heat dissipation system, including a first pipe to be connected, a second pipe to be connected and the fluid connector according to any one of the above solutions, where
the male end joint of the fluid connector is connected to the first pipe to be connected, and the female end joint of the fluid connector is connected to the second pipe to be connected.

Since the energy storage heat dissipation system provided by the present application includes the fluid connector according to any one of the above solutions, the energy storage heat dissipation system according to the present application includes all the beneficial effects of the fluid connector.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.
FIG. 1 is a schematic view showing the cross-sectional structure of a male end joint according to the present application;
FIG. 2 is a schematic view showing the cross-sectional structure of a female end joint and a locking assembly according to the present application being assembled together;
FIG. 3 is a partially enlarged schematic view of the structure of FIG. 2;
FIG. 4 is a schematic view showing the cross-sectional structure of a fluid connector according to the present application when a locking ball is facing a receiving groove; and
FIG. 5 is a schematic view showing the cross-sectional structure of the fluid connector according to the present application.

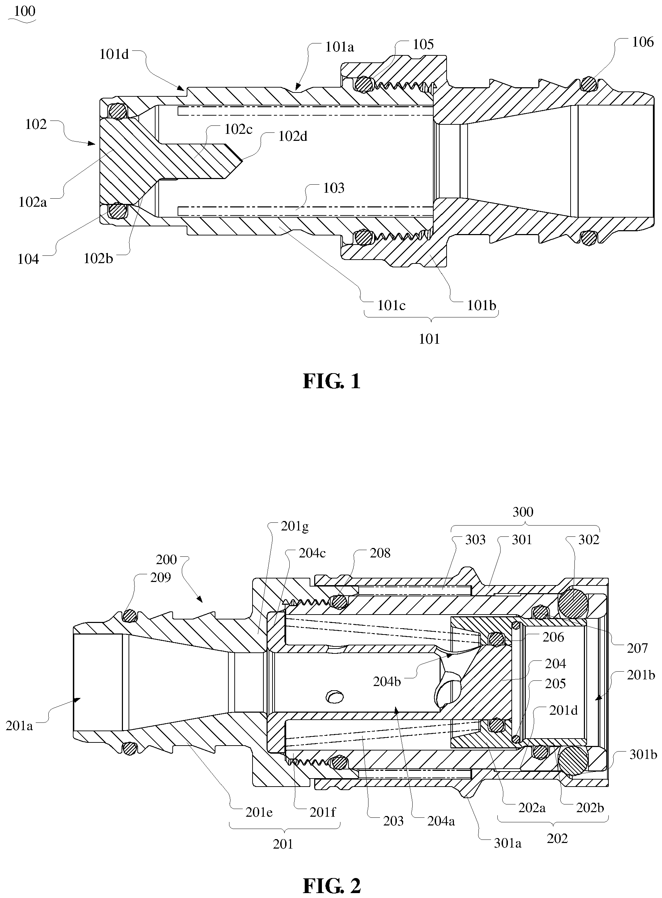

**Reference numerals in FIG. 1 to FIG. 5:**

| | | | |
|---|---|---|---|
| 1000 | fluid connector, | 100 | male end joint, |
| 101 | male end body, | 101a | receiving groove, |
| 101b | male end valve seat, | 101c | male end valve body, |
| 101d | second step, | 102 | valve head, |
| 102a | valve head blocking portion, | 102b | abutting portion, |
| 102c | protruding rod, | 102d | conical protrusion, |
| 103 | first reset member, | 104 | first sealing ring, |
| 105 | sixth sealing ring, | 106 | seventh sealing ring, |
| 200 | female end joint, | 201 | female end body, |
| 201a | first opening, | 201b | second opening, |
| 201c | second limiting protrusion, | 201d | anti-off protrusion, |
| 201e | female end valve seat, | 201f | female end valve body, |
| 201g | third step, | 202 | valve core, |
| 202a | first valve core sleeve, | 202b | second valve core sleeve, |
| 202c | first step, | 202d | first limiting protrusion, |
| 203 | second reset member, | 204 | valve stem, |
| 204a | communication cavity, | 204b | communication hole, |
| 204c | flange, | 205 | third sealing ring, |
| 206 | second sealing ring, | 207 | fourth sealing ring, |
| 208 | fifth sealing ring, | 209 | third sealing ring, |
| 300 | locking assembly, | 301 | sliding sleeve, |
| 301a | anti-slip protrusion, | 301b | pushing portion, |
| 302 | locking ball, | 303 | elastic member. |

### DETAILED DESCRIPTION OF THE EMBODIMENTS

The technical solutions in the embodiments of the present application will be clearly and completely illustrated in conjunction with FIGS. 1 to 5 of the embodiments of the present application. The present application can be implemented in a variety of different forms and is not limited to the technical solutions described in this embodiment. The following specific technical solutions are intended to facilitate a clearer and more thorough understanding of the disclosure of the present application, where the words indicating directions such as below refer only to the position of the structure shown in the corresponding drawings.

It should be understood that the terms used herein are intended only to describe specific embodiments rather than limit the present application. When used herein, the singular form "a" is intended to include the plural form unless clearly indicated otherwise in the context. Further, when used in this specification, the terms "include" and/or "comprise" indicate the presence of features, wholes, steps, elements and/or components, but do not exclude the presence or addition of one or more other features, wholes, steps, elements, components and/or combinations thereof. The subsequent description in the specification are preferred embodiments of the present application, the description is for the purpose of illustrating the general principles of the present application and is not intended to limit the scope of the present application. The scope of protection of the present application shall be as defined in the appended claims.

With combined reference of FIGS. 1 to 5, a fluid connector 1000 is provided according to the present application, which can be used to connect pipes in an energy storage heat dissipation system. It should be noted that the fluid connector 1000 according to the present application is not limited to use in energy storage heat dissipation systems, it can also be used in other systems containing pipes instead.

Specifically, the fluid connector 1000 is formed by injection molded of an engineering plastic, the cost of plastics is low, therefore, the fluid connector 1000 according to the present application reduces the cost of raw materials. In addition, after the fluid connector 1000 is injection molded, there's no need for surface treatment, which reduces the manufacturing cost.

The fluid connector 1000 can be mass-produced through injection molding, which improves production efficiency.

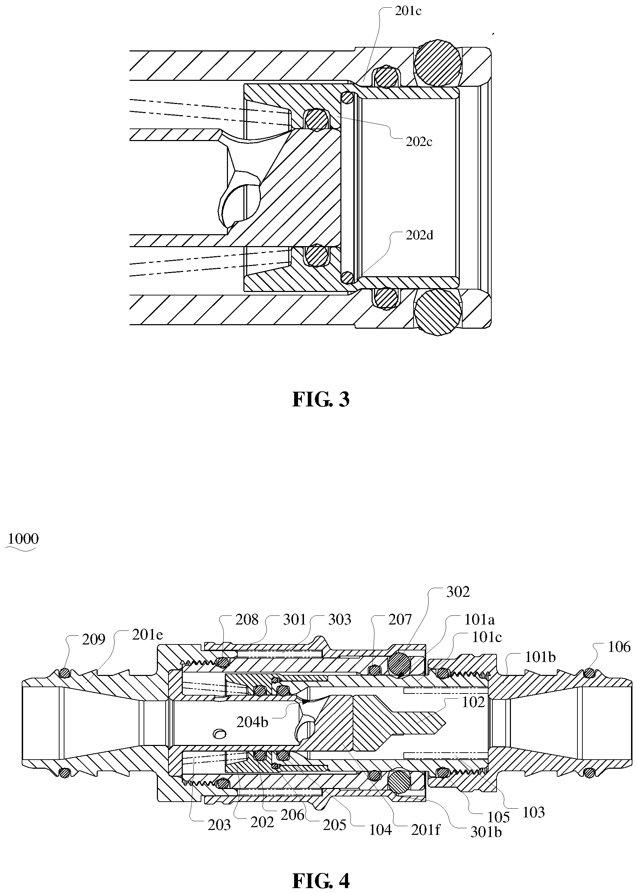

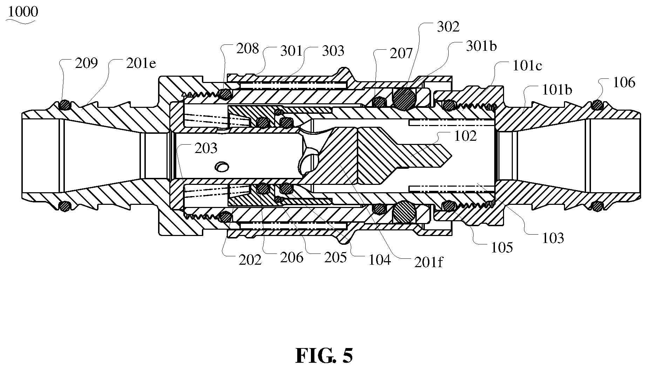

As shown in FIG. 4 and FIG. 5, the fluid connector 1000 includes a male end joint 100 and a female end joint 200. The male end joint 100 includes a male end body 101 and a valve head assembly. As shown in FIG. 1, the male end body 101 has an inner cavity with two ends respectively connected to the outside, and one end of the male end body 101 is used to connect a pipe to be connected, and the other end of the male end body is used to connect the female end joint 200.

The valve head assembly blocks the male end body 101, specifically, the valve head assembly blocks the other end of the male end body 101 used to connect the female end joint 200.

The female end joint 200 includes a female end body 201 and a valve core assembly. As shown in FIG. 2 and FIG. 3, the female end body 201 has an inner cavity with two ends respectively connected to the outside, one end of the female end body 201 is used to connect another pipe to be connected, and the other end of the female end body is used to connect the male end joint 100.

The valve core assembly blocks the female end body 201, specifically, the valve core assembly blocks the other end of the female end body 201 used to connect the male end joint 100.

The male end body 101 and the female end body 201 are installed at the two pipes to be connected respectively and are plug-connected. When the male end body 101 and the female end body 201 are plugged in place, both the valve head assembly and the valve core assembly are opened to make the male end joint 100 and the female end joint 200 be in communication.

When the male end body 101 and the female end body 201 are disconnected, both the valve head assembly and the valve core assembly are closed, so that the valve head assembly blocks the male end body 101, and the valve core assembly blocks the female end body 201. The valve head assembly and the valve core assembly respectively act as stop valves to prevent the liquid in the pipes from flowing out.

It can be understood that the valve head assembly being open means that the valve head assembly is in a state that enables the two ends of the male end body 101 to be in communication, and the valve core assembly being open means that the valve core assembly is in a state that enables the two ends of the female end body 201 to be in communication.

It should be noted that the opening and closing of the valve head assembly and the valve core assembly can be achieved in a variety of ways. In some embodiments, the male end joint 100 according to the present application also includes a first reset member 103, which is installed in the inner cavity of the male end body 101 and is used to drive the valve head assembly to reset and close.

Further, the first reset member 103 according to the present application is an elastic reset member, which may be a spring or the like. One end of the first reset member 103 is connected to or abut against an inner wall of the male end body 101, and the other end of the first reset member 103 is used to abut against or be connected to the valve head assembly. When the male end body 101 and the female end body 201 are plugged in place, the female end body 201 pushes the valve head assembly to open, and the valve head assembly compresses the first reset member 103 during the movement; when the male end body 101 and the female end body 201 are separated from each other, the first reset member 103 drives the valve head assembly to reset and close under an action of a restoring force.

It should be noted that the first reset member 103 may be other structures capable of driving the valve head assembly to reset. For example, the first reset member 103 is an electromagnet or a magnet encapsulated in the male end body 101. Taking the first reset member 103 as an electromagnet as an example, a metal block or the like is embedded in the valve head assembly; when the valve head assembly needs to be closed, the electromagnet is energized, and the valve head assembly is moved to a closed position by magnetic attraction; and when the valve head assembly needs to be opened, the electromagnet is de-energized.

In some embodiments, the valve head assembly includes a valve head and a first sealing ring.

The valve head 102 includes a valve head blocking portion 102a and an abutting portion 102b. A first sealing groove is provided on the inner wall of the male end body 101, and the first sealing ring 104 is installed in the first sealing groove to provide sealing between the valve head blocking portion 102a and the male end body 101. The first sealing ring 104 further improves the sealing performance between the valve head 102 and the male end body 101.

The valve head blocking portion 102a blocks the male end body 101, and the abutting portion 102b is fixed on the valve head blocking portion 102a and is used to abut against the first reset member 103, to compress the first reset member 103.

Further, according to the present application, a cross-section of the abutting portion 102b gradually decreases along a direction approaching the first reset member 103, so that the abutting portion 102b abuts against the first reset member 103 stably. In addition, the resistance to the fluid when flowing by the abutting portion 102b is reduced.

The valve head 102 further includes a protruding rod 102c arranged at an end of the abutting portion 102b away from the valve head blocking portion 102a, and an end of the protruding rod 102c away from a conical portion is provided with a conical protrusion 102d, further reducing the resistance of the fluid. In addition, the protruding rod 102c is able to extend into the first reset member 103, that is, into the spring, and thus the protruding rod 102c also plays a guiding role to prevent the valve head 102 from deviating during movement.

In some embodiments, the female end joint 200 further includes a second reset member 203, which is installed in an inner cavity of the female end body 201 and is used to drive the valve core assembly to reset and close.

It should be noted that the structure of the second reset member 203 is not limited, and any structure that can drive the valve core assembly to reset and close belongs to the protection scope of the present application.

Further, according to the present application, the second reset member 203 is specifically an elastic reset member, such as a spring, etc. The second reset member 203 is installed in the inner cavity of the female end body 201, one end of the second reset member is connected to or abuts against the inner cavity wall of the female end body 201, and the other end of the second reset member 203 is used to abut against or be connected to the valve core assembly.

When the male end body 101 and the female end body 201 are plugged in place, the male end body 101 pushes the valve core assembly to open and compress the second reset member 203; when the male end body 101 and the female end body 201 are separated from each other, the second reset member 203 drives the valve core assembly to reset and close under an action of a restoring force.

It should be noted that the second reset member 203 may be other structures capable of driving the valve core assembly to reset. For example, the second reset member 203 is an electromagnet or a magnet encapsulated in the female end body 201. Taking the second reset member 203 as an electromagnet as an example, a metal block or the like is embedded in the valve core assembly; when the valve core assembly needs to be closed, the electromagnet is energized, and the valve core assembly is moved to a closed position by magnetic attraction; and when the valve core assembly needs to be opened, the electromagnet is de-energized.

In some embodiments, a valve stem 204 is installed in the inner cavity of the female end body 201, and the valve stem 204 is used to abut against the valve head 102 of the valve head assembly, to push the valve head assembly to open.

Specifically, the valve stem 204 is coaxially arranged with the female end body 201. A communication cavity 204a is provided inside the valve stem 204, and the communication cavity 204a is in communication with a first opening 201 of the female end body 201 for connecting the pipe to be connected, and a communication hole 204b being in communication with the communication cavity 204a is provided on a side wall of the valve stem 204. In other words, one end of the valve stem 204 close to the first opening 201 of the female end body 201 is open, and the other end of the valve stem close to a second opening 201b of the female end body 201 is closed.

The valve core assembly is slidably sleeved on the valve stem 204 in a sealed manner, and is also slidably sleeved inside the female end body 201 in a sealed manner, to isolate the two openings at both ends of the female end body 201, so that the valve core assembly is able to block the female end body 201.

When the male end body 101 and the female end body 201 are plugged in place, the male end body 101 pushes the valve core assembly to slide to expose the communication hole 204b, so that the communication hole 204b is in communication with the second opening 201b of the female end body 201, to realize the opening of the valve core assembly.

It should be noted that the number of communication holes 204b is not limited and can be set according to specific needs. For the fluid to uniformly enter the communication cavity 204a in the valve stem 204, according to the present application, the number of the communication holes 204b is multiple, and the communication holes are uniformly distributed on the valve stem 204 along an annular shape around an axis of the valve stem 204.

Specifically, the valve core assembly according to the present application includes a valve core 202 and a second sealing ring 206. A second sealing groove for installing the second sealing ring 206 is provided on an inner wall of the valve core 202. The second sealing ring 206 is used to provide sealing between the valve stem 204 and the valve core 202. The arrangement of the second sealing ring 206 ensures the sealing between the valve core assembly and the female end body 201. It should be noted that when the valve core 202 slides along the valve stem 204, the second sealing ring 206 is always sealed with an outer wall of the valve stem 204.

Further, the valve core 202 according to the present application specifically includes a first valve core sleeve 202a and a second valve core sleeve 202b connected to the first valve core sleeve 202a. Specifically, the first valve core sleeve 202a and the second valve core sleeve 202b are integrally formed for connection. It should be noted that the integrally formed connection of the first valve core sleeve 202a and the second valve core sleeve 202b is only a specific embodiment of the present application. In practical applications, the first valve core sleeve 202a and the second valve core sleeve 202b may also be connected in other ways.

The first valve core sleeve 202a is sleeved on the valve stem 204 in a sealed manner, and a first step 202c configured to abut against the male end body 101 is formed at a connection between an inner wall of the second valve core sleeve 202b and an inner wall of the first valve core sleeve 202a. Specifically, the first valve core sleeve 202a and the second valve core sleeve 202b are coaxially arranged, and an inner diameter of the first valve core sleeve 202a is smaller than an inner diameter of the second valve core sleeve 202b. Therefore, the first step 202c is formed at the connection between the first valve core sleeve 202a and the second valve core sleeve 202b, so that when the male end joint 100 and the female end joint 200 are plug-connected, the end of the male end body 101 can abut against the first step 202c.

The outer wall of the male end body 101 is provided with a second step 101d configured to abut against the end of the second valve core sleeve 202b away from the first valve core sleeve 202a.

Further, according to the present application, a third sealing groove is provided at a position of the inner wall of the second valve core sleeve 202b where the inner wall of the second valve core sleeve is connected to the first valve core sleeve 202a, and a third sealing ring 205 for sealing the outer wall of the male end body 101 is installed in the third sealing groove in a sealed manner. The third sealing ring 205 is provided to further reduce the risk of fluid leakage when the male end joint 100 and the female end joint 200 are plug-connected.

A first limiting protrusion 202d is provided on an outer wall of the valve core 202, and a second limiting protrusion 201c configured to abut against the first limiting protrusion 202d is provided on the inner wall of the female end body 201. The second reset member 203 is in a compressed state, therefore, the restoring force of the second reset member 203 drives the first limiting protrusion 202d of the valve core 202 to abut against the second limiting protrusion 201c of the female end body 201, so as to prevent the valve core 202 from slipping off the valve stem 204.

In order to facilitate processing and manufacturing, according to the present application, the first limiting protrusion 202d corresponds to the third sealing groove in position, that is, the second valve core sleeve 202b extends, starting at the position of the second sealing groove, from the inner wall of the second valve core sleeve 202b to the outer wall of the second valve core sleeve 202b, to form the first limiting protrusion 202d.

Further, according to the present application, the second sealing groove is provided on the inner wall of the first valve core sleeve 202a.

In order to facilitate the installation of the valve stem 204, according to the present application, the end of the valve stem 204 facing the first opening 201 of the female end body 201 is provided with a flange 204c, and the flange 204c extends in a direction away from the axis of the valve stem 204 to the inner wall of the female end body 201, to facilitate the positioning of the valve stem 204. Specifically, the female end body 201 is provided with a third step 201g at a position close to the first opening, to abut against the flange 204c.

The second reset member 203 is a spring in a compressed state, one end of the second reset member 203 abuts against the flange 204c, and the other end of the second reset member 203 abuts against the valve core 202. Specifically, an abutting groove is provided at an end of the first valve core sleeve 202a away from the second valve core sleeve 202b, the second reset member 203 is sleeved outside the valve stem 204, and the other end of the second reset member 203 abuts against the abutting groove.

Further, according to the present application, a fourth sealing groove is provided on the inner wall of the female end body 201, and a fourth sealing ring 207 for sealing the outer wall of the second valve core sleeve 202b is installed in the fourth sealing groove in a sealed manner. When the male end body 101 and the female end body 201 are plugged in place, an inner wall of the fourth sealing ring 207 is sealingly connected with the outer wall of the male end body 101, and an inner wall of the first sealing ring 104 is sealingly connected with the outer wall of the valve stem 204, thereby improving the sealing performance of the connection between the male end joint 100 and the female end joint 200.

In some embodiments, the fluid connector 1000 further includes a locking assembly 300 for locking the female end joint 200 and the male end joint 100, to realize stable connection between the female end joint 200 and the female end joint 200.

It should be noted that the structure of the locking assembly 300 is not limited, which may be embodied as flanges provided on the outer wall of the male end body 101 and the outer wall of the female end body 201, and the flanges on the male end body 101 and the female end body 201 are fastened by bolts.

Of course, the locking assembly 300 may also be other structures. For example, the locking assembly 300 includes a sliding sleeve 301, a locking ball 302 and an elastic member 303. The sliding sleeve 301 is slidably connected to an outer side of the female end body 201, and a receiving cavity for receiving the elastic member 303 is defined by an inner wall of the sliding sleeve 301 and the outer wall of the female end body 201. One end of the elastic member 303 is connected to or abuts against the female end body 201, and the other end of the elastic member 303 abuts against or is connected to the sliding sleeve 301.

A side wall of the female end body 201 is provided with a receiving through hole for receiving the locking ball 302. When the male end body 101 and the female end body 201 are in a separated state, the elastic member 303 is in a compressed state, and the outer wall of the valve core 202 supports the locking ball 302, to make at least a part of the locking ball 302 extend from the receiving through hole and abuts against the sliding sleeve 301 in a limiting manner.

The outer wall of the male end body 101 is provided with a receiving groove 101a for receiving the locking ball 302, and when the male end body 101 and the female end body 201 are plugged in place, the receiving groove 101a is right below the locking ball 302. At this time, under a restoring force of the elastic member 303, the sliding sleeve 301 pushes the locking ball 302 to fall into the receiving groove 101a, and a pushing portion 301b of the sliding sleeve 301 for limiting and abutting against the locking ball 302 passes over the locking ball 302, and a constant-diameter surface of an inner wall of the sliding sleeve 301 presses the locking ball 302 into the receiving groove 101a, to realize locking of the male end body 101 and the female end body 201.

To facilitate the locking ball 302 entering the receiving groove 101a, according to the present application, the receiving groove 101a is an annular groove provided along a circumference of the male end body 101.

Specifically, a surface, configured for pushing the locking ball 302, of the pushing portion 301b of the sliding sleeve 301 is an inclined surface, and along a direction away from the second opening of the female end body 201, the inclined surface is inclined toward a direction away from an axis of the sliding sleeve 301.

In order to prevent the pushing portion 301b of the sliding sleeve 301 from slipping off the female end body 201 by passing over the locking ball 302, according to the present application, an anti-off protrusion 201d for preventing the sliding sleeve 301 from slipping off is provided on the outer wall of the female end body 201.

It should be noted that the number and material of the locking balls 302 are not limited. In this embodiment, the case that the number of locking balls 302 is multiple, and the locking balls 302 are steel balls is taken as an example. The steel ball may specifically be a hollow ball or a solid ball.

Further, according to the present application, an anti-slip protrusion 301a is provided on the outer wall of the sliding sleeve 301 for easy handholding, and the anti-slip protrusion 301a is provided a position of the outer wall of the sliding sleeve 301 corresponding to an end of the receiving cavity away from the second opening 201b of the female end body 201, which improves the strength of the sliding sleeve 301.

In some embodiments, according to the present application, the female end body 201 includes a female end valve seat 201e and a female end valve body 201f, the female end valve seat 201e is threadedly connected to the female end valve body 201f, and the connection between the above two is sealed by a fifth sealing ring 208.

The male end body 101 includes a male end valve seat 101b and a male end valve body 101c, the male end valve seat 101b is threadedly connected to the male end valve body 101c, and the connection between the above two is sealed by a sixth sealing ring 105.

The female end body 201 and the male end body 101 are each configured to be processed and manufactured in two parts, which reduces the manufacturing difficulty.

The male end valve seat 101b and the female end valve seat 201e are used to connect the pipes to be connected respectively, and the connection positions are sealed by a seventh sealing ring 106 and a third sealing ring 209 respectively.

In some embodiments, the fluid connector 1000 is made of engineering plastics. Compared with the machining mode in the conventional technology, which has a low speed, cannot meet the mass production demand and causes much material waste during processing, the present application employs injection molding processing, which has a fast manufacturing speed, thereby realizing mass production, and avoiding material waste. The anti-corrosion ability of the fluid connector 1000 made of engineering plastics is much higher than that of metal. In addition, the use of engineering materials greatly improves the compatibility of various structural parts of the fluid connector 1000 with various cooling cycle working fluids (ethylene glycol, propylene glycol, industrial pure water, etc.).

Taking the case that the male end joint 100 is stationary and the female end joint 200 is movable, the connection operation process of the fluid connector 1000 is as follows. The male end valve seat 101b is held by a left hand and is kept still, the female end valve seat 201e is held by a right hand, the first opening 201 of the female end body 201 is aligned with the male end body 101 to perform insertion, a force is applied until a crisp click is heard, and then the female end joint 200 is released by hand. At this time, the male end joint 100 and the female end joint 200 are in communication, and the entire pipeline is connected as a whole.

The connection action process of the fluid connector 1000 is as follows. The male end valve body 101c of the male end joint 100 is inserted into the valve core 202 of the female end joint 200. Under the action of the external force, the valve core 202 moves backward in the female end body 201 (moving backward means moving in the direction approaching the second end of the female end body 201), and the valve stem 204 of the female end joint 200 abuts against the valve head 102 of the male end joint 100, to make the valve head 102 move backward in the male end body 101 (moving backward means moving in the direction approching the male end valve seat 101b); until the valve head moves to a position where the locking ball 302 is coincide with the receiving groove 101a on the outer wall of the male end joint 200, as shown in FIG. 4; at this time, the sliding sleeve 301 on the female end joint 200 pushes the sliding sleeve 301 to slide along the outer side of the female end valve body 201f under the action of the elastic member 303; the sliding sleeve 301 pushes the locking ball 302 into the groove; under the continuous action of the restoring force of the elastic member 303, the pushing portion 301b of the sliding sleeve 301 passes over the locking ball 302 until the constant-diameter surface of the inner wall of the sliding sleeve 301 can achieve self-locking, preventing the locking ball 302 from moving backward, and the male end joint 100 and the female end joint 200 are connected into a whole, as shown in FIG. 5.

The disconnection operation process of the fluid connector 1000 is as follows. The male end valve seat 101b is kept still by the left hand, the sliding sleeve 301 is held by a thumb and an index finger of the right hand, a force is applied to make the sliding sleeve 301 move backward. At this time, the female end joint 200 will instantly pop out as a whole, and the male end joint 100 and the female end joint 200 will be separated and respectively sealed.

The disconnection action process of the fluid connector 1000 is as follows. The sliding sleeve 301 moves backward until the pushing portion 301b of the sliding sleeve 301 is at the position of the locking ball 302, the female end joint 200 moves backward under the action of the first reset member 103 and the second reset member 203, and the locking ball 302 moves outward along a diameter direction of the male valve body 101c until the locking ball 302 completely moves out of the receiving groove 101a. At this time, the locking state of the male end joint 100 and the female end joint 200 is completely released, and the female end joint 200 is disconnected from the male end joint 100.

An energy storage heat dissipation system is provided according to the second aspect of the present application, including a first pipe to be connected, a second pipe to be connected, and a fluid connector 1000 according to any of the above embodiments.

The male end joint 100 of the fluid connector 1000 is connected to the first pipe to be connected, and the female end joint 200 of the fluid connector 1000 is used to be connected to the second pipe to be connected.

Since the energy storage heat dissipation system provided by the present application includes the fluid connector 1000 according to any of the above embodiments, the energy storage and heat dissipation system provided by the present application includes all the beneficial effects of the fluid connector 1000.

It should be noted that the words indicating orientations in this application, such as upper, lower, and the like are based on the direction of FIG. 1 of the specification, which is only for the convenience of expression and does not have other specific meanings.

It should also be noted that in this application, relational terms such as first and second, etc. are only used to distinguish one entity or operation from another entity or operation, and do not necessarily require or imply any such actual relationship or order between these entities or operations. Moreover, the terms "include", "comprise" or any other variants thereof are intended to cover non-exclusive inclusion, so that an article or device including a series of elements includes not only those elements, but also other elements not explicitly listed, or also includes elements inherent to the article or device. In the absence of further restrictions, the elements defined by the phrase "includes one..." do not exclude the existence of other identical elements in the article or device including the above elements.

The principle and the embodiments of the present application are illustrated herein by specific examples. The above description of examples is only intended to help the understanding of the method and the idea of the present application. It should be noted that, for those skilled in the art, a few of modifications and improvements may be made to the present application without departing from the principle of the present application, and these modifications and improvements are also deemed to fall into the scope of the present application defined by the claims.

## Claims

1. A fluid connector, being formed by injection molding of an engineering plastic, wherein the fluid connector comprises a male end joint and a female end joint, and wherein
the male end joint comprises a male end body and a valve head assembly, and the valve head assembly is configured to block the male end body;
the female end joint comprises a female end body and a valve core assembly, and the valve core assembly is configured to block the female end body; and
the male end body is plug-connected with the female end body, and in a case that the male end body and the female end body are plugged in place, both the valve head assembly and the valve core assembly are opened, to allow communication between the male end joint and the female end joint.

2. The fluid connector according to claim 1, wherein the male end joint further comprises a first reset member, the first reset member is installed in an inner cavity of the male end body, and is configured to drive the valve head assembly to reset and close.

3. The fluid connector according to claim 2, wherein the valve head assembly comprises a valve head and a first sealing ring, and wherein
the valve head comprises a valve head blocking portion and an abutting portion, a first sealing groove is provided on an inner wall of the male end body, the first sealing ring is installed in the first sealing groove to provide sealing between the valve head blocking portion and the male end body, and the abutting portion is fixed on the valve head blocking portion and is configured to abut against the first reset member.

4. The fluid connector according to claim 3, wherein
a cross-section of the abutting portion gradually decreases along a direction approaching the first reset member; and/or
the valve head further comprises a protruding rod arranged at an end of the abutting portion away from the valve head blocking portion, and an end of the protruding rod away from a conical portion is provided with a conical protrusion.

5. The fluid connector according to claim 1, wherein the female end joint further comprises a second reset member, and the second reset member is installed in an inner cavity of the female end body and is configured to drive the valve core assembly to reset and close.

6. The fluid connector according to claim 5, wherein a valve stem is installed in the inner cavity of the female end body, and the valve stem is configured to abut against the valve head assembly, to push the valve head assembly to open; and wherein
a communication cavity is provided inside the valve stem, and the communication cavity is in communication with a first opening of the female end body for connecting a pipe to be connected, and a communication hole being in communication with the communication cavity is provided on a side wall of the valve stem;
the valve core assembly is slidably sleeved on the valve stem in a sealed manner, and is also slidably sleeved inside the female end body in a sealed manner, to isolate openings at two ends of the female end body; and
in a case that the male end body and the female end body are plugged in place, the male end body is configured to push the valve core assembly to slide to expose the communication hole, to make the communication hole be in communication with a second opening of the female end body.

7. The fluid connector according to claim 6, wherein the valve core assembly comprises a valve core and a second sealing ring, and wherein
a second sealing groove configured for installing the second sealing ring is provided on an inner wall of the valve core, and the second sealing ring is configured to provide sealing between the valve stem and the valve core.

8. The fluid connector according to claim 1, further comprising a locking assembly for locking the female end joint and the male end joint.

9. The fluid connector according to claim 8, wherein the locking assembly comprises a sliding sleeve, a locking ball and an elastic member, and wherein
the sliding sleeve is connected to an outer side of the female end body in a slidable manner, one end of the elastic member is connected to or abuts against the female end body, and the other end of the elastic member abuts against or is connected to the sliding sleeve;
a side wall of the female end body is provided with a receiving through hole for receiving the locking ball, when the male end body and the female end body are in a separated state, the elastic member is in a compressed state, and an outer wall of a valve core supports the locking ball, to make at least a part of the locking ball extend from the receiving through hole and abuts against the sliding sleeve in a limiting manner; and
an outer wall of the male end body is provided with a receiving groove for receiving the locking ball, and in a case that the male end body and the female end body are plugged in place, the sliding sleeve is configured to push the locking ball into the receiving groove, a pushing portion of the sliding sleeve for limiting and abutting against the locking ball is allowed to pass over the locking ball, and a constant-diameter surface of an inner wall of the sliding sleeve is configured to press the locking ball into the receiving groove.

10. An energy storage heat dissipation system, comprising a first pipe to be connected, a second pipe to be connected, and the fluid connector according to any one of claims 1 to 9, wherein the male end joint of the fluid connector is connected to the first pipe to be connected, and the female end joint of the fluid connector is connected to the second pipe to be connected.
